(19) Europäisches Patentamt / European Patent Office / Office européen des brevets

(11) **EP 4 250 188 A1**

(12) **EUROPEAN PATENT APPLICATION**
published in accordance with Art. 153(4) EPC

(43) Date of publication:
**27.09.2023  Bulletin 2023/39**

(21) Application number: **21896479.9**

(22) Date of filing: **10.09.2021**

(51) International Patent Classification (IPC):
**G06N 20/00** (2019.01)

(86) International application number:
**PCT/CN2021/117779**

(87) International publication number:
**WO 2022/110975 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2020  CN 202011345470**

(71) Applicant: **ZTE Corporation**
**Shenzhen, Guangdong  518057 (CN)**

(72) Inventor: **GUO, Hua**
**Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **FEDERATED LEARNING PARTICIPANT SELECTION METHOD AND APPARATUS, AND DEVICE AND STORAGE MEDIUM**

(57)    A federated learning participant selection method and apparatus, and a device and a storage medium. The federated learning participant selection method comprises: acquiring a plurality of participants to be selected (S11); respectively determining a data quality factor, a service factor and a stability factor of each of said participants (S12); and on the basis of the data quality factors, the service factors and the stability factors of the plurality of said participants, determining a selected participant (S13).

FIG. 2

EP 4 250 188 A1

## Description

## CROSS-REFERENCE TO RELATED APPLICATION

This application is filed on the basis of the Chinese patent application No. 202011345470.3 filed November 25, 2020, and claims priority of the Chinese patent application, the entire contents of which are incorporated herein by reference.

## TECHNICAL FIELD

The present disclosure relates to the technical field of communication, in particular to a method, a device, and an apparatus for selecting participants, and a storage medium.

## BACKGROUND

Federated learning is a solution to solve the privacy and security of data sharing in the field of artificial intelligence. The quality and communication effect of participants in federated learning have great influence on the results of federated learning.

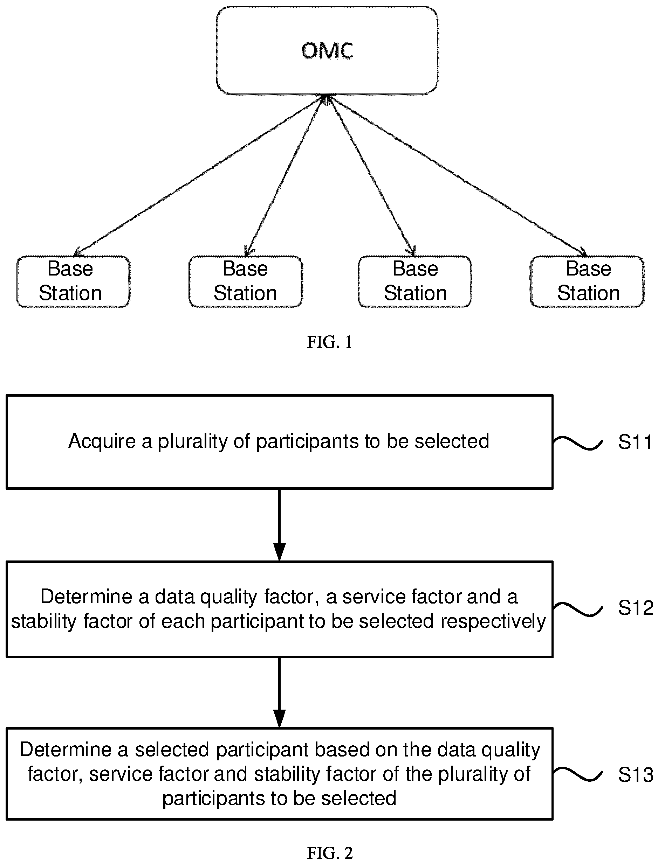

FIG. 1 depicts a schematic diagram showing the overall architecture of an existing federated learning system in the communication field. As shown in FIG. 1, the Operation and Maintenance Center (OMC) acts as a coordinator or server of federated learning, and the base stations act as participants or clients. In this framework, the selection of participants can be based on the historical data of OMC to avoid the communication burden caused by frequent interaction with the base station and the impact on the routine service of the base station.

## SUMMARY

Provided are a method, a device, and an apparatus for selecting participants in federated learning, and a storage medium in some embodiments of the present disclosure.

An embodiment of the present disclosure provides a method for selecting participants in federated learning, which includes, acquiring a plurality of participants to be selected; determining a data quality factor, a service factor and a stability factor of each participant to be selected respectively; and determining a selected participant based on the data quality factor, service factor and stability factor of the plurality of participants to be selected.

An embodiment of the present disclosure provides a device for selecting participants in federated learning, which includes, an acquisition module configured to acquire a plurality of participants to be selected; a factor determination module configured to determine a data quality factor, a service factor and a stability factor of each participant to be selected respectively; and a participant selection module configured to determine a selected participant based on the data quality factor, service factor and stability factor of the plurality of participants to be selected.

An embodiment of the present disclosure provides an apparatus for selecting participants in federated learning, which includes, at least one processor, and a memory storing at least one program thereon, which when executed by the processor, causes the processor to carry out the method of any one embodiment of the present disclosure.

An embodiment of the present disclosure provides a computer-readable storage medium storing a computer program which, when executed by a processor, causes the processor to carry out the method of any one embodiment of the present disclosure.

With regard to the above embodiments and other aspects of the present disclosure and their implementations, more illustrations are provided in the attached drawings, detailed description and claims.

## BRIEF DESCRIPTION OF DRAWINGS

FIG. 1 depicts a schematic diagram showing the overall architecture of an existing federated learning system in the communication field;

FIG. 2 depicts a flowchart showing a method for selecting participants in federated learning according to an embodiment of the present disclosure;

FIG. 3 depicts a schematic diagram showing a device for selecting participants in federated learning according to an embodiment of the present disclosure; and

FIG. 4 depicts a schematic diagram showing an apparatus for selecting participants in federated learning according to an embodiment of the present disclosure.

## DETAILED DESCRIPTION

Some embodiments of the present invention will be described with details below with reference to the accompanying drawings in order to illustrate the purpose, technical scheme and advantages of the present disclosure. It should be noted that various embodiments in the present disclosure and the features in the embodiments can be combined with each other without conflict.

The steps as shown in the flowchart of the drawings can be performed in a computer system such as a set of computer-executable instructions. Furthermore, in some cases, the steps shown or described may be performed in a different order than the logical order shown in the flowcharts.

The technical scheme of the present disclosure can be applied to various communication systems, such as the Global System of Mobile Communication (GSM) system, Code Division Multiple Access (CDMA), CDMA) system, Wideband Code Division Multiple Access (WCDMA) system, General Packet Radio Service (GPRS), Long Term Evolution (LTE) system, LTE-A (Advanced Long Term Evolution) system, Universal Mobile Telecommunications System (UMTS), and 5th generation wireless mobile communication (5G) system, etc., while the present disclosure does not limit the particular system which the scheme is applied to. Illustration is provided with respect to the 5G system in some embodiments of the present disclosure.

In an embodiment of the present disclosure, a base station is a device that can communicate with a user equipment. A base station can be any kind of equipment with wireless transmitting and receiving function. A base station includes but is not limited to: base station NodeB, evolved base station eNodeB, base station in 5G communication system, base station in future communication system, access node in Wi-Fi system, wireless relay node, wireless backhaul node, etc. A base station can also be a wireless controller in a cloud radio access network (CRAN) scenario. A base station can also be a small station, a transmission reference point (TRP), etc., and the present disclosure is not limited thereto. Illustration is provided with respect to the 5G base station in some embodiments of the present disclosure.

In an embodiment, the present disclosure provides a method for selecting participants in federated learning. As shown in FIG. 2, the method includes operations S11, S12, and S13.

At S11, a plurality of participants to be selected are acquired.

At S12, a data quality factor, a service factor and a stability factor of each participant to be selected are determined respectively.

At S13, a participant is selected based on the data quality factor, service factor and stability factor of the plurality of participants to be selected.

In this embodiment, the participant refers to a base station participating in federated learning, which can also be called a client. Participants to be selected refer to the participants who are selected to participate in the federated learning.

The acquisition of the participants to be selected can be a selection of a plurality of participants to be selected for communication with an OMC.

In one embodiment, determining the data quality factor, service factor and stability factor of the participants to be selected includes, determining the data quality factor, service factor and stability factor of the participants to be selected based on the type of the federated learning.

In an implementation, the type of the federated learning includes one or more of the following, Key Performance Indicator (KPI) degradation detection, cell weight optimization, or optical module fault prediction.

In this embodiment, the data quality factor, service factor and stability factor in different scenarios can be determined according to the type of federated learning.

In an embodiment, when the type of the federated learning is cell weight optimization, determining the data quality factor, service factor and stability factor of the participants to be selected based on the type of the federated learning includes:

determining a data quality factor based on a quality of service (QoS) warning parameter of the participants to be selected;

determining a service factor based on the latitude and longitude of the participants to be selected; and

determining a stability factor based on the in-service duration of the participants to be selected.

In this embodiment, the QoS warning is selected as the data quality factor "data", the latitude and longitude of the base station is selected as the service factor "value", and the in-service duration of the base station is selected as the stability factor "available".

This embodiment is related to the selection of the base stations for optimization. The selection of cells to participate in optimization is based on cell performance data or MR data. Base stations with poor cell performance shall be subjected to the optimization, so QoS warning is selected as the data quality factor, and the ratio of QoS warning occurrence is taken as the value of data quality factor "data", that is, data=Num(QoS warnings)/Num (warnings).

In this embodiment, the antenna weight optimization is related to the geographical position of the base station, and the geographical position of the base station in an area should have the relevance. Therefore, the latitude and longitude of the base station is selected as the service factor "value", that is, value = [attitude, longitude], where "attitude" denotes the attitude value, and "longitude" denotes the longitude value.

The in-service duration during which the base station is in service is taken as the stability factor, available, that is, available=time (in-service)/time.

In an embodiment, determining the selected participants based on the data quality factors, service factors and stability factors of a plurality of participants to be selected includes, determining the participants to be selected whose data quality factors, service factors and stability factors meet the values of an optimization function, as the selected participants.

In an embodiment, the optimization function is: f (data, value, available) =

$$\frac{\sum_{i=1}^{n}(value[1]_i - Lagitude)^2}{n} < a \; ;$$

$$\frac{\sum_{i=1}^{n}(value[2]_i - Longitude)^2}{n} < a \; ;$$

$$\sum_{i=1}^{n} data_i < b;$$

$$\sum_{i=1}^{n} available_i < c;$$

where "n" denotes the total number of participants to be selected, "i" denotes the $i^{th}$ participant to be selected, "data" denotes the data quality factor, "value" denotes the service factor, "available" denotes the stability factor, "a" denotes a first threshold determined by the value of the parameter "value" of each participant to be selected, "b" denotes a second threshold determined by the value of parameter "data" of each participant to be selected, and "c" denotes a third threshold determined by the value of the parameter "available" of each participant to be selected.

In this embodiment, the minimum value of the sum of variance of the value of service factor "value" of each participant is set to a, the sum of value of the parameter "data" of each base station is set as b, and the sum of the value of the parameter "available" of each base station is set as c. The values of a, b and c are set according to the accuracy requirements of the algorithm, and can be adjusted with the progress of the algorithm after an initial value is set for each.

In some examples, the value of each base station is substituted into the optimization function f (data, value, available), and the base station with the value that satisfies this equation, is selected.

In an embodiment, under the condition that the type of the federated learning is KPI deterioration detection or optical module fault prediction, determining the selected participants based on the data quality factors, service factors and stability factors of a plurality of participants to be selected includes: determining a selection parameter of each participant to be selected based on data quality factors, service factors and stability factors of a plurality of participants to be selected; sorting the participants to be selected by their selection parameter, and determining the top L participants to be selected in the sorting as the selected participants.

In an embodiment, in the case that the type of the federated learning is KPI degradation detection, determining the data quality factor, service factor and stability factor of the participant to be selected based on the type of the federated learning, includes: determining the data quality factor based on a parameter of integrity of performance data of the participant to be selected; determining the service factor based on a QoS warning parameter of the participant to be selected; and determining a stability factor based on the in-service duration of the participant to be selected.

In this embodiment, the integrity of performance data is selected as the data quality factor, "data", the QoS alarm is selected as the service factor, "value", and the in-service duration of the base station is selected as the stability factor, "available".

In this embodiment, the calculation of the above data quality factor is to calculate the ratio of the duration of the normal performance data collection, that is, data=1-Time(supplementary collection)/Time. "Time" denotes to the total duration of performance data collection, and "Time(supplementary collection)" denotes the duration of supplementary performance data collection.

In this embodiment, in case that the type of the federated learning is KPI degradation detection, it is necessary to select the sites where KPI degradation often occurs, so as to find out the reasons for the degradation as many as possible by the analysis, so the QoS alarm is selected as the service factor, "value". The ratio of QoS alarms is taken as the value of the service factor "value", that is, value=Num(QoS alarms) /Num (alarms), where "Num (alarms)" denotes to the total number of alarms, and "Num(QoS alarms)" denotes to the number of QoS alarms.

In this embodiment, the in-service duration during which the base station is in service is taken as the stability factor, "available", that is, available=time (in-service)/time, where "time (in-service)" denotes the duration during which the base station is in service

In an embodiment, determining a selection parameter for the respective participant to be selected based on the data quality factor, service factor and stability factor of participant the plurality of participants to be selected, includes: normalizing the data quality factor, service factor and stability factor respectively by means of a linear normalization method for each participant to be selected; performing a first weighting processing to the normalized data quality factor, service factor and stability factor to obtain the selection parameter of the respective participant to be selected.

The above data quality factor "data", service factor "value" and stability factor "available" are within the different dimension, so normalization is needed. The above factors are normalized by a linear normalization method respectively to generate normalized data quality factor, "Data1", service factor, "Value 1", and stability factor, "Available 1".

The sum of the data of the above dimensions can be calculated after the normalization.

Since the weights of these factors in the algorithm shall be considered, such that f (data, value, available) = A1× Data1+B1× Value1+C1× Available 1, where the weight factors A1, B1 and C1 can be set according to experience, but A+B+C should be 1.

In some examples, the calculation is performed for each base station according to the above algorithm. And the final results are sorted by their values in descending order, and the top L base stations are determined as the selected base stations. L is a positive integer, which can be set according to the practical situation.

In an embodiment, when the type of the federated learning is optical module fault prediction, determining the data quality factor, service factor and stability factor of the participants to be selected based on the type of the federated learning includes: determining the data quality factor based on a parameter of integrity of performance data of the participant to be selected; determining the service factor based on a quality parameter of an optical module of the participant to be selected; and determining a stability factor based on the in-service duration of the participant to be selected.

In this embodiment, the integrity of performance data is selected as the data quality factor, "data", the in-service duration of the link of the optical module is selected as the service factor, "value", and the in-service duration of the base station is selected as the stability factor, "available".

In this embodiment, since the bit error rate data mainly utilized by the algorithm is reported through performance data, the integrity of performance data is selected as the data quality factor. The calculation of the factor is to calculate the ratio of the duration of the normal performance data collection, that is, data=1-Time(supplementary collection)/Time.

In this embodiment, other data required for prediction are obtained from the optical module, so it is necessary to ensure the stability of the link of the optical module. The quality of the link of the optical module is taken as the service factor, which is represented by the in-service duration of the link of the optical module, that is, value=time(optical module in service) /time.

In this embodiment, the in-service duration during which the base station is in service is taken as the stability factor, "available", that is, available=time (in-service)/time.

In an embodiment, determining a selection parameter for the respective participant to be selected based on the data quality factor, service factor and stability factor of the plurality of participants to be selected, includes: performing a second weighting processing to the data quality factor, service factor and stability factor to obtain the selection parameter of the respective participant to be selected.

In this embodiment, the dimensions of the above factors are the same, and normalization is not required, so it is only necessary to take f (data, value, available) = a2× data+b2× value+c2× available. In particular, a, b, and c as weight factors, can be set and adjusted according to experience.

In some examples, the calculation is performed for each base station according to the above algorithm. And the final results are sorted by their values in descending order, and the top L base stations are determined as the selected base stations. L is a positive integer, which can be set according to the practical situation.

The following illustrates an embodiment showing the selection of the participants in a federated learning associated with the KPI degradation detection, this embodiment requires selecting cells with apparent KPI degradation as participants.

At operation 1, base stations under peak service load, in hibernation or energy-saving state are eliminated.

At operation 2, the integrity of performance data is selected as the data quality factor, "data".

The calculation of the data quality factor is to calculate the ratio of the duration of the normal performance data collection, that is, data=1-Time(supplementary collection)/Time. "Time" denotes to the total duration of performance data collection, and "Time(supplementary collection)" denotes the duration of supplementary performance data collection.

At operation 3, QoS alarm is selected as the service factor, "value".

In the case that the type of the federated learning is KPI degradation detection, it is necessary to select the sites where KPI degradation often occurs, so as to find out the reasons for the degradation as many as possible by the analysis, so the QoS alarm is selected as the service factor, "value". The ratio of QoS alarms is taken as the value of the service factor "value", that is, value=Num(QoS alarms) /Num (alarms), where "Num (alarms)" denotes to the total number of alarms, and "Num(QoS alarms)" denotes to the number of QoS alarms.

At operation 4, the in-service duration during which the base station is in service is taken as the stability factor, "available", that is, available=time (in-service)/time, where "time (in-service)" denotes the duration during which the base station is in service

At operation 5, the above data quality factor, "data", service factor, "value", and stability factor, "available" are normalized by linear normalization method respectively to obtain normalized data quality factor, "Data1", service factor, "Value 1", and stability factor, "Available1 ".

$$\mathrm{Data}1 = \frac{data - min(data)}{max(data) - min(data)},$$

$$\mathrm{Valule}1 = \frac{value - min(value)}{max(value) - min(value)},$$

$$\mathrm{Available}1 = \frac{available - min(available)}{max(available) - min(available)}.$$

At operation 6, the sum of the data of the above dimensions can be calculated after the normalization.

Also, the weights of these factors in the algorithm shall be considered, such that f (data, value, available) = A1× Data1+B1× Value1+C1× Available 1, where the weight factors A1, B1 and C1 can be set according to experience, but A+B+C should be 1.

At operation 7, several base stations are selected randomly, or calculation is performed for each base station according to the above algorithm. And the final results are sorted by their values in descending order, and the top L base stations are determined as the selected base stations. L is a positive integer, which can be set according to the practical situation.

The following illustrates an embodiment in a case of cell weight optimization. Cell weight optimization provides automatic adjustment of cell broadcast weight, and users build a task for an area and set appropriate parameters. The system automatically adjusts the weights by measuring, optimizing and calculating the optimal weight group, evaluating and restoring the weights.

At operation 1, base stations under peak service load, in hibernation or energy-saving state are eliminated.

At operation 2, the QoS warning is selected as the data quality factor, "data".

The selection of base stations for optimization is based on the cell performance data or MR data. Cells with poor cell performance shall be subjected to the optimization, so QoS warning is selected as the data quality factor, and the ratio of QoS warning occurrence is taken as the value of data quality factor "data", that is, data=Num(QoS warnings) /Num (warnings).

At operation 3, latitude and longitude of a base station is selected as the service factor, "value".

In this embodiment, the antenna weight optimization is related to the geographical position of the base station, and the geographical position of the base station in an area should have the relevance. Therefore, the latitude and longitude of the base station is selected as the service factor "value", that is, value = [attitude, longitude], where "attitude" denotes the attitude value, and "longitude" denotes the longitude value.

At operation 4, the in-service duration during which the base station is in service is taken as the stability factor, available, that is, available=time (in-service)/time.

At operation 5, for the service factor, "value", the longitude and latitude of each base station need to be the closest, so the minimum value of the sum of variance of the value of the service factor, "value" of each base station is set as a, the threshold of the sum of the parameter "data" of each base station is set as b, and the threshold of the sum of the parameter "available" of each base station is set as c, so f () is taken as the optimization function as follows:

$$f\,(data,\,value,\,available) =$$

$$\frac{\sum_{i=1}^{n}(value[1]_i - Lagitude)^2}{n} < a;$$

$$\frac{\sum_{i=1}^{n}(value[2]_i - Longitude)^2}{n} < a;$$

$$\sum_{i=1}^{n} data_i < b \ ;$$

$$\sum_{i=1}^{n} available_i < c \ ;$$

where "n" denotes the total number of participants to be selected, "i" denotes the $i^{th}$ participant to be selected, "data" denotes the data quality factor, "value" denotes the service factor, "available" denotes the stability factor, "a" denotes a first threshold determined by the value of the parameter "value" of each participant to be selected, "b" denotes a second threshold determined by the value of parameter "data" of each participant to be selected, and "c"denotes a third threshold determined by the value of the parameter "available" of each participant to be selected.

The values of a, b and c are set according to the accuracy requirements of the algorithm, and can be adjusted with the progress of the algorithm after an initial value is set for each.

At operation 6, several base stations are selected randomly, and the value of each base station is substituted into the function f (data, value, available), and the base station with the value that satisfies this equation, is selected.

The following illustrates an application example with a case of optical module fault prediction. Data such as optical port error code data of optical module is utilized for prediction by the algorithm.

At operation 1, base stations under peak service load, in hibernation or energy-saving state are eliminated.

At operation 2, the integrity of performance data is selected as the data quality factor, "data".

Since the bit error rate data mainly utilized by the algorithm is reported through performance data, the integrity of performance data is selected as the data quality factor. The calculation of the factor is to calculate the ratio of the duration of the normal performance data collection, that is, data=1-Time(supplementary collection)/Time.

At operation 3, the in-service duration of the link of the optical module is selected as the service factor, "value".

Further data required for prediction are obtained from the optical module, so it is necessary to ensure the stability of the link of the optical module. The quality of the link of the optical module is taken as the service factor, which is represented by the in-service duration of the link of the optical module, that is, value=time (optical module in service) /time.

At operation 4, the in-service duration during which the base station is in service is taken as the stability factor, available, that is, available=time (in-service)/time.

At operation 5, the dimensions of the above factors are the same, such that f (data, value, available) = a2× data+b2× value+c2× available. a2, b2, and c2 as weight factors, can be set and adjusted according to experience.

At operation 6, several base stations are selected randomly, or calculation is performed for each base station according to the above algorithm. And the final results are sorted by their values in descending order, and the top L base stations are determined as the selected base stations. L is a positive integer, which can be set according to the practical situation.

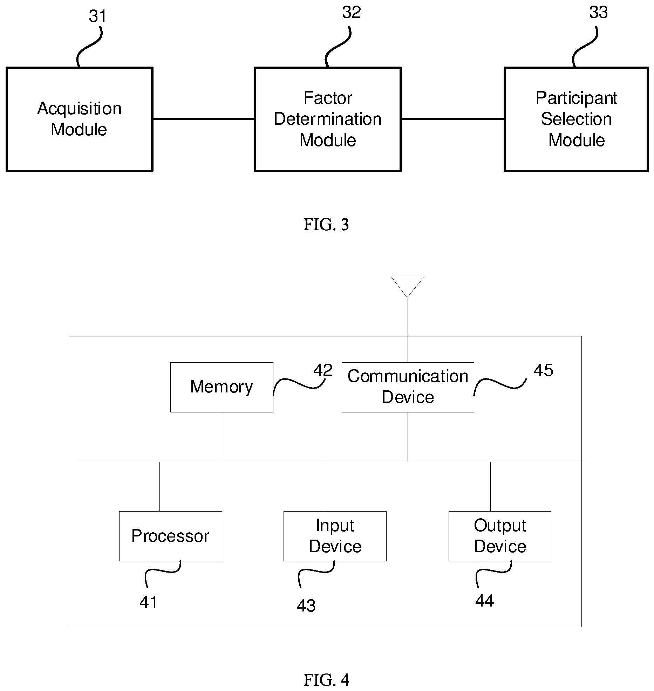

An embodiment of the present disclosure provides a device for participant selection. As shown in FIG. 3, the device provided in this embodiment mainly includes an acquisition module 31, a factor determination module 32 and a participant selection module 33.

The acquisition module 31 is configured to acquire a plurality of participants to be selected.

The factor determination module 32 is configured to determine a data quality factor, a service factor and a stability factor of each participant to be selected respectively.

The participant selection module 33 is configured to determine the selected participant based on the data quality factor, service factor and stability factor of a plurality of participants to be selected.

The device for selecting participants in this embodiment is involved in the following operations, acquiring a plurality of participants to be selected; determining a data quality factor, a service factor and a stability factor of each participant to be selected respectively; and selecting a participant in the plurality of participants to be selected based on the data quality factor, service factor and stability factor of the participant. In this embodiment, data quality factor, service factor and stability factor are introduced for participants selection, and the results are quantified to facilitate the selection of participants, such that high-quality federated learning participants are selected and the effect of federated learning is improved.

In one embodiment, determining the data quality factor, service factor and stability factor of the participants to be selected includes, determining the data quality factor, service factor and stability factor of the participants to be selected based on the type of the federated learning.

In an implementation, the type of the federated learning includes one or more of the following, KPI degradation detection, cell weight optimization, or optical module fault prediction.

In an embodiment, when the type of the federated learning is cell weight optimization, determining the data quality factor, service factor and stability factor of the participants to be selected based on the type of the federated learning includes:

> determining a data quality factor based on a quality of service (QoS) warning parameter of the participants to be selected;
> determining a service factor based on the latitude and longitude of the participants to be selected; and

determining a stability factor based on the in-service duration of the participants to be selected.

In an embodiment, determining the selected participants based on the data quality factors, service factors and stability factors of a plurality of participants to be selected includes, determining the participants to be selected whose data quality factors, service factors and stability factors meet the values of an optimal function, as the selected participants.

In an embodiment, the optimal function is: f (data, value, available) =

$$\frac{\sum_{i=1}^{n}(value[1]_i - Lagitude)^2}{n} < a;$$

$$\frac{\sum_{i=1}^{n}(value[2]_i - Longitude)^2}{n} < a;$$

$$\sum_{i=1}^{n} data_i < b;$$

$$\sum_{i=1}^{n} available_i < c;$$

where "n" denotes the total number of participants to be selected, "i" denotes the $i^{th}$ participant to be selected, "data" denotes the data quality factor, "value" denotes the service factor, "available" denotes the stability factor, "a" denotes a first threshold determined by the "value" of each participant to be selected, "b" denotes a second threshold determined by the "data" value of each participant to be selected, and "c" denotes a third threshold determined by the "available" value of each participant to be selected.

In an embodiment, under the condition that the type of the federated learning is KPI deterioration detection or optical module fault prediction, determining the selected participants based on the data quality factors, service factors and stability factors of a plurality of participants to be selected includes: determining a selection parameter of each participant to be selected based on data quality factors, service factors and stability factors of a plurality of participants to be selected; sorting the participants to be selected by their selection parameter, and determining the top L participants to be selected in the sorting as the selected participants.

In an embodiment, in the case that the type of the federated learning is KPI degradation detection, determining the data quality factor, service factor and stability factor of the participant to be selected based on the type of the federated learning, includes: determining the data quality factor based on a parameter of integrity of performance data of the participant to be selected; determining the service factor based on a QoS warning parameter of the participant to be selected; and determining a stability factor based on the in-service duration of the participant to be selected.

In an embodiment, determining a selection parameter for the respective participant to be selected based on the data quality factor, service factor and stability factor of the plurality of participant to be selected, includes: normalizing the data quality factor, service factor and stability factor respectively by means of a linear normalization method for each participant to be selected; the normalized data quality factor, service factor and stability factor are subject to a first weighting processing to obtain the selection parameter of the respective participant to be selected.

In an embodiment, when the type of the federated learning is optical module fault prediction, determining the data quality factor, service factor and stability factor of the participants to be selected based on the type of the federated learning includes: determining the data quality factor based on a parameter of integrity of performance data of the participant to be selected; determining the service factor based on a quality parameter of a link of an optical module of the participant to be selected; and determining a stability factor based on the in-service duration of the participant to be selected.

In an embodiment, determining a selection parameter for the respective participant to be selected based on the data quality factor, service factor and stability factor of the plurality of participant to be selected, includes: performing a second weighting processing to the data quality factor, service factor and stability factor to obtain the selection parameter of the respective participant to be selected.

The device for selecting participants according to this embodiment can carry out the method for selecting participants according to any one of the embodiments of the present disclosure, and has corresponding functional modules and beneficial effects. For technical details not described in detail in this embodiment, please refer to the method for selecting participants according to any one of the embodiments of the present disclosure.

It is worth noting that in the above embodiment of the device for selecting participants, each unit and module included is only divided according to the functional logic, but it is not limited to the above division, as long as the corresponding functions can be realized. In addition, the specific names of each functional unit are only for the convenience of distinguishing each other, and are not intended to limit the scope of the present disclosure.

An embodiment of the present disclosure further provides an apparatus for selecting participant in federated learning. FIG. 4 depicts a schematic diagram showing an apparatus for selecting participant in federated learning according to an embodiment of the present disclosure. As shown in FIG. 4, the apparatus includes a processor 41, a memory 42, an input device 43, an output device 44, and a communication device 45. There can be one or more processors 41 provided in the apparatus, and one processor 41 is shown by way of an example in FIG. 4. The processor 41, the memory 42, the input device 43, and the output device 44 in the apparatus can be connected by a bus or other means, FIG. 4 showing the connection by a bus by way of an example.

As a computer-readable storage medium, the memory 42 can be configured to store software programs, computer-executable programs and modules, such as program instructions/modules corresponding to the method for selecting participants in federated learning in an embodiment of the present disclosure (e.g., the acquisition module 31, the factor determination module 32 and the participant selection module 33 in the device for selecting participants in federated learning). The software programs, instructions and modules stored in the memory 42, when executed by the processor 41, causes the processor 41 to perform various functional applications and data processing of the apparatus, to carry out any one of the methods in any one of the embodiments of the present disclosure.

The memory 42 may generally include a program storage section and a data storage section, in which the program storage section may store an operating system and application programs for performing at least one operation, and data storage section may store data created according to the operation of apparatus, or the like. In addition, the memory 42 can include a high-speed random-access memory and a nonvolatile memory, such as at least one disk memory device, a flash memory device, or other nonvolatile solid-state memory devices. In some implementations, the memory 42 may include memories remotely located relative to the processor 41, and these remote memories may be connected to the apparatus through a network. Examples of the above networks include, but are not limited to, the Internet, intranet, local area network, mobile communication network, and combinations thereof.

The input device 43 may be configured to receive input numeric or character information and generate key signal input related to user settings and function control of the apparatus. The output device 44 may include a display device such as a screen.

The communication device 45 may include a receiver and a transmitter. The communication device 45 is configured to receive and transmit information for communication under the control of the processor 41.

An embodiment of the present disclosure further provides a storage medium containing computer-executable instructions, which, when executed by a computer processor, causes the processor to carry out a method for selecting participant of federated learning, the method includes,

acquiring a plurality of participants to be selected;

determining respectively a data quality factor, a service factor and a stability factor of each participant to be selected; and

determining a selected participant based on the data quality factor, service factor and stability factor of the plurality of participants to be selected.

It is apparent that the storage medium according to the present disclosure contains computer-executable instructions which are not limited to operations of the above-mentioned methods, and may also be executable to perform related operations in the method according to any one of the embodiments of the present disclosure.

Provided are a method, a device, and an apparatus for selecting participants in federated learning, and a storage medium in some embodiments of the present disclosure. The method includes, acquiring a plurality of participants to be selected; determining a data quality factor, a service factor and a stability factor of each participant to be selected respectively; and determining a selected participant based on the data quality factor, service factor and stability factor of the plurality of participants to be selected. In this embodiment, data quality factor, service factor and stability factor are introduced for participants selection, and the results are quantified to facilitate the selection of participants, such that high-quality federated learning participants are selected and the effect of federated learning is improved.

From the description of the above embodiments, it is apparent to a person having ordinary skills in the art that the method of the above embodiments can be implemented by means of software with necessary general hardware, or by hardware, of course, but in many cases, the former is the better practice. Based on this understanding, the technical solution or the part that contributes to the prior art of the present disclosure can be embodied in the form of software products, which can be stored in a computer-readable storage medium such as floppy disk, Read-Only Memory (ROM), Random Access Memory (RAM), FLASH memory, hard disk or optical disk of a computer, etc., including several instructions to cause a computer device (which can be a personal computer, a server, or a network device, etc.) to carry out the methods described in various embodiments of the present disclosure.

Described above are some embodiments which are illustrative and are not intended to limit the present disclosure.

It should be understood by those having ordinary skills in the art that the term user equipment covers any suitable type of wireless user equipment, such as a mobile phone, a portable data processing device, a portable web browser, or a vehicle-mounted mobile station.

Generally, various embodiments of the present disclosure may be implemented as hardware or dedicated circuits, software, logic or any suitable combination thereof. For example, some aspects may be implemented in hardware, while other aspects may be implemented in firmware or software executable by a controller, microprocessor or other computing device, although the present disclosure is not limited thereto.

Some embodiments of the present disclosure can be implemented by a data processor of a mobile device executing computer program instructions, for example, in a processor entity, or by hardware, or by a combination of software and hardware. Computer program instructions can be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present disclosure may represent program process, or may represent interconnected logic circuits, modules and functions, or may represent the combination of program process and logic circuits, modules and functions. Computer programs can be stored in the memory. The memory can be of any type suitable for the local technical environment and can be realized with any suitable data storage technology, such as, but not limited to, read-only memory (ROM), random access memory (RAM), optical memory devices and systems (digital versatile disc (DVD) or CD disc), etc. Computer-readable media may include non-transitory storage media. The data processor can be of any type suitable for the local technical environment, such as but not limited to a general-purpose computer, a special-purpose computer, a microprocessor, a digital signal processor (DSP), an application-specific integrated circuit (ASIC), a programmable logic device (FGPA) and a processor based on a multi-core processor architecture.

Some embodiments of the present disclosure are illustrated above by way of non-limiting implementations. However, various modifications and alternations to the above embodiments are apparent to those having ordinary skills in the art when considering the drawings and claims, without departing from the scope of the present disclosure. Therefore, the proper scope of the present disclosure should be defined by claims.

**Claims**

1. A method for selecting participants in federated learning, comprising,

   acquiring a plurality of participants to be selected;
   determining a data quality factor, a service factor and a stability factor of each participant to be selected respectively; and
   determining a selected participant based on the data quality factor, service factor and stability factor of the plurality of participants to be selected.

2. The method according to claim 1, wherein, determining the data quality factor, the service factor and the stability factor of each participant to be selected respectively comprises,
determining the data quality factor, the service factor and the stability factor of the respective participant to be selected based on a type of the federated learning.

3. The method according to claim 2, wherein, the type of the federated learning comprises at least one of, Key Performance Indicator (KPI) degradation detection, cell weight optimization, or optical module fault prediction.

4. The method according to claim 3, wherein, in response to the type of the federated learning being cell weight optimization, determining the data quality factor, the service factor and the stability factor of the respective participant to be selected based on the type of the federated learning comprises,

determining the data quality factor based on a quality of service (QoS) alarm parameter of the respective participant to be selected;
determining the service factor based on a latitude and a longitude of the respective participant to be selected; and
determining the stability factor based on an in-service duration of the respective participant to be selected.

5. The method according to claim 4, wherein, determining the selected participant based on the data quality factor, service factor and stability factor of the plurality of participants to be selected, comprises,
determining the participant to be selected as the selected participant, in response to the participant to be selected having the data quality factor, the service factor, and the stability factor that meet a value of an optimal function.

6. The method according to claim 5, wherein, the optimal function is: f (data, value, available) =

$$\frac{\sum_{i=1}^{n}(value[1]_i - Lagitude)^2}{n} < a;$$

$$\frac{\sum_{i=1}^{n}(value[2]_i - Longitude)^2}{n} < a;$$

$$\sum_{i=1}^{n} data_i < b;$$

$$\sum_{i=1}^{n} available_i < c;$$

wherein "n" denotes a total number of the plurality of participants to be selected, "i" denotes an $i^{th}$ participant to be selected in the plurality of participants to be selected, "data" denotes the data quality factor, "value" denotes the service factor, "available" denotes the stability factor, "a" denotes a first threshold determined by a value of parameter "value" of the respective participant to be selected, "b" denotes a second threshold determined by a value of parameter "data" of the respective participant to be selected, and "c" denotes a third threshold determined by a value of parameter "available" of the respective participant to be selected.

7. The method according to claim 3, wherein, in response to the type of the federated learning being KPI deterioration or optical module fault prediction, determining the selected participant based on the data quality factor, service factor and stability factor of the plurality of participants to be selected, comprises,

determining a selection parameter for each participant to be selected based on the data quality factor, service factor and stability factor of the respective participant, and
performing a descending sorting with the selection parameter of each participant to be selected, and determining top L participants to be selected in the sorting as selected participants.

8. The method according to claim 7, in response to the type of the federated learning being KPI deterioration, determining the data quality factor, service factor and stability factor of the respective participant to be selected based on the type of the federated learning comprises,

determining the data quality factor based on an integrity parameter of performance data of the respective participant to be selected;
determining the service factor based on a quality of service (QoS) alarm parameter of the respective participant to be selected; and
determining the stability factor based on an in-service duration of the respective participant to be selected.

9. The method according to claim 8, wherein, determining the selection parameter of the respective participant to be selected based on the data quality factor, service factor and stability factor of the respective of the plurality of participants to be selected, comprises,

normalizing the data quality factor, service factor and stability factor respectively by means of a linear normalization method for each participant to be selected; and

performing a first weighting processing to the normalized data quality factor, service factor and stability factor to obtain the selection parameter of the respective participant to be selected.

10. The method according to claim 7, wherein, in response to the type of the federated learning being optical module fault prediction, determining the data quality factor, service factor and stability factor of the respective participant to be selected based on the type of the federated learning comprises,

determining the data quality factor based on an integrity parameter of performance data of the respective participant to be selected; determining the service factor based on a quality of link of optical module of the respective participant to be selected; and determining the stability factor based on an in-service duration of the respective participant to be selected.

11. The method according to claim 10, wherein, determining the selection parameter of the respective participant to be selected based on the data quality factor, service factor and stability factor of the respective of the plurality of participants to be selected, comprises, for each participant to be selected, performing a second weighting processing to the data quality factor, service factor and stability factor to obtain the selection parameter of the respective participant to be selected.

12. A device for selecting participants in federated learning, comprising,

an acquisition module configured to acquire a plurality of participants to be selected; a factor determination module configured to determine a data quality factor, a service factor and a stability factor of each participant to be selected respectively; and a participant selection module configured to determine a selected participant based on the data quality factor, service factor and stability factor of a plurality of participants to be selected.

13. An apparatus for selecting participants in federated learning, comprising,

at least one processor; and a memory for storing at least one program which, when executed by the at least one processor, causes the at least one processor to carry out the method of any one of claims 1 to 11.

14. A computer-readable storage medium storing at least one computer program which, when executed by a processor, causes the processor to carry out the method of any one of claims 1 to 11.

OMC

Base Station  Base Station  Base Station  Base Station

FIG. 1

Acquire a plurality of participants to be selected — S11

Determine a data quality factor, a service factor and a stability factor of each participant to be selected respectively — S12

Determine a selected participant based on the data quality factor, service factor and stability factor of the plurality of participants to be selected — S13

FIG. 2

31

Acquisition
Module

32

Factor
Determination
Module

33

Participant
Selection
Module

FIG. 3

Memory

42

Communication
Device

45

Processor

Input
Device

Output
Device

41

43

44

FIG. 4

## INTERNATIONAL SEARCH REPORT

International application No.

**PCT/CN2021/117779**

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 联邦, 学习, 参与, 质量, 业务, 稳定, 基站, 通信, federat+, learn+, participant, quality, business, stabili+, base, station, communica+

**C. DOCUMENTS CONSIDERED TO BE RELEVANT**

| Category* | Citation of document, with indication, where appropriate, of the relevant passages | Relevant to claim No. |
|---|---|---|
| PX | CN 113255924 A (ZTE CORPORATION) 13 August 2021 (2021-08-13) description, paragraphs [0029]-[0145], and figures 1-4 | 1-14 |
| A | CN 110598870 A (SHENZHEN QIANHAI WEBANK CO., LTD.) 20 December 2019 (2019-12-20) description, paragraphs [0046]-[0057] | 1-14 |
| A | CN 111325351 A (SHENZHEN QIANHAI WEBANK CO., LTD.) 23 June 2020 (2020-06-23) entire document | 1-14 |
| A | US 2015106166 A1 (CARRIER IQ, INC.) 16 April 2015 (2015-04-16) entire document | 1-14 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 November 2021** | **02 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/117779** |

| Patent document cited in search report | | | Publication date (day/month/year) | Patent family member(s) | Publication date (day/month/year) |
| --- | --- | --- | --- | --- | --- |
| CN | 113255924 | A | 13 August 2021 | None | |
| CN | 110598870 | A | 20 December 2019 | None | |
| CN | 111325351 | A | 23 June 2020 | None | |
| US | 2015106166 | A1 | 16 April 2015 | None | |

Form PCT/ISA/210 (patent family annex) (January 2015)

**REFERENCES CITED IN THE DESCRIPTION**

**Patent documents cited in the description**

- CN 202011345470